# EUROPÄISCHE PATENTANMELDUNG

(11) **EP 2 369 544 A1**
(43) Veröffentlichungstag der Anmeldung: **28.09.2011**
(21) Anmeldenummer: 10075090.0
(22) Anmeldetag: 26.02.2010
(51) Int. Cl.: G06Q 20/00, G07F 7/00, G07F 7/10

(54) **Kasseneinrichtung und Verfahren für den bargeldlosen Zahlungsverkehr**

(71) Anmelder: Deutsche Telekom AG, 53113 Bonn (DE)
(72) Erfinder: Ren, Zhiyun, 12357 Berlin (DE); Heuer, Jörg, 14163 Berlin (DE); Yin, Ming, 12203 Berlin (DE); Steffens, Ernst-Joachim, 13089 Berlin (DE); Hofmann, Klaus-Peter, 12205 Berlin (DE)
(74) Vertreter: Drosch, Ulrich

(57) **Zusammenfassung**

Die Erfindung betrifft eine Kasseneinrichtung, welche als Teil eines elektronischen Systems für den bargeldlosen Zahlungsverkehr ausgebildet ist. Das System besteht hierbei aus der computerbasierten Kasseneinrichtung selbst, aus einer Mehrzahl, mit einer normierten Funkschnittstelle ausgestatteter Token, aus elektronischen Backendeinrichtungen von Zahlungsdienstleistern und aus einem Netzwerk zum Datenaustausch zwischen der Kasseneinrichtung und den Backendeinrichtungen. Die computerbasierte Kasseneinrichtung weist eine Zentralverarbeitungseinheit, eine von dieser verarbeitete Kern-Kassenanwendung und eine zu der Funkschnittstelle der Token kompatible Funkschnittstelle auf. Sie ist erfindungsgemäß für bargeldlose Zahlungen unter Verwendung unterschiedlicher Bezahlsysteme und/oder der Bezahlsysteme unterschiedlicher Zahlungsdienstleister mittels der Token ausgebildet und dazu um ein die Funkschnittstelle umfassendes Schreib-/Lesemodul und um ein zusätzliches universelles Kommunikationsmodul erweitert, welches bei einem Bezahlvorgang zur Steuerung der Kommunikation zwischen einem Token und der Kasseneinrichtung einerseits und der Kommunikation zwischen der Kasseneinrichtung und den Backendeinrichtungen des einbezogenen Zahlungsdienstleisters andererseits mit der Kern-Kassenanwendung über ein API der Kasseneinrichtung interagiert.

## Beschreibung

Die Erfindung betrifft eine computerbasierte Kasseneinrichtung, welche als Teil eines elektronischen Systems für den bargeldlosen Zahlungsverkehr ausgebildet ist. Entsprechend einer bevorzugten Ausbildungsform handelt es sich dabei um eine Kasseneinrichtung, welche über Schnittstellen für die bargeldlose Bezahlung, wie beispielsweise einen Chipkartenleser und/oder einen Barcodeleser, verfügt und somit bereits einen bargeldlosen Zahlungsverkehr in bekannter Weise ermöglicht, darüber hinaus aber erfindungsgemäß zur Nutzung alternativer Möglichkeiten des bargeldlosen Zahlungsverkehrs weitergebildet ist. Gegenstand der Erfindung ist ferner ein Verfahren zur Durchführung bargeldloser Bezahlvorgänge unter Verwendung der vorgeschlagenen Kasseneinrichtung.

Die Nutzung des bargeldlosen Zahlungsverkehrs für den Einkauf von Waren, die Bezahlung von Dienstleistungen und den Erwerb von Tickets für den Personenverkehr oder Kulturveranstaltungen, wobei die Bezahlung unmittelbar am so genannten Point-of-Sale erfolgt, ist seit Langem bekannt. Dafür genutzte Kasseneinrichtungen am Point-of-Sale sind beispielsweise mit einem Kartenlesegerät ausgestattet und über ein Wide Area Netzwerk (WAN) mit elektronischen Einrichtungen von Zahlungsdienstleistern, den so genannten Backendeinrichtungen, verbunden. Beim Kauf autorisiert der Kunde die Abbuchung des Kaufbetrages von seinem Konto, indem er sich mittels einer von einem Zahlungsdienstleister ausgegebenen Chip- beziehungsweise Magnetkarte, gegenüber dem Zahlungsdienstleister authentifiziert. Dazu wird die entsprechende Karte des Kunden in das Lesegerät der Kasseneinrichtung eingeführt, der Kunde bestätigt den Kauf und initiiert hierdurch den Bezahlvorgang, welcher durch die Backendeinrichtungen des Zahlungsdienstleisters transaktionsbasiert abgewickelt wird.

Nachteilig an dieser bekannten Lösung für den bargeldlosen Zahlungsverkehr ist es, dass der Kunde hierzu mindestens ein zusätzliches Token in Form einer Chip- oder Magnetkarte, also einen ausschließlich für den Zweck der bargeldlosen Bezahlung vorgesehenen Gegenstand mitführen muss.

In den vergangnen Jahren hat die Nutzung des Mobilfunks aufgrund des Ausbaus der entsprechenden Mobilfunknetze eine sehr starke Verbreitung gefunden. Entsprechend hoch ist zwischenzeitlich der Grad der Penetration der Bevölkerung mit Mobilfunkgeräten, wobei sich aufgrund des technischen Fortschritts gleichzeitig die Funktionalität der Geräte immer wieder erweitert. Die Tatschache, dass insoweit ein sehr hoher Prozentsatz der Bevölkerung ständig ein Mobilfunkgerät mit sich führt, hat Anlass zu der Überlegung gegeben, die Mobilfunkgeräte beziehungsweise Handys für den bargeldlosen Zahlungsverkehr, das heißt als Token für die Authentifizierung gegenüber einem Zahlungsdienstleister, einzusetzen und sie zu diesem Zweck um eine entsprechende Bezahlfunktion zu erweitern.

In diesem Zusammenhang sind bereits Lösungen bekannt geworden, die es ermöglichen, mittels eines Mobilfunkgeräts an speziellen Verkaufsautomaten Tickets für den Personenverkehr zu erwerben. Hierbei handelt es sich jedoch um Verkaufsautomaten, welche speziell für diesen Zweck konzipiert und ausgerüstet wurden. Darüber hinaus sind auch vereinzelt Kasseneinrichtungen bekannt geworden, welche als Teil proprietärer Systeme einzelner Zahlungsdienstleister, wie bestimmter Kreditkartenunternehmen, eine bargeldlose Zahlung am Point-of-Sale über eine Funkschnittstelle mittels eines entsprechend ausgebildeten Token ermöglichen.

Auf der anderen Seite ist aber in Supermärkten, an Tankstellen, Theaterkassen und dergleichen eine sehr große Zahl von Kasseneinrichtungen im Einsatz, welche bereits computerbasiert sind und eine bargeldlose Bezahlung entsprechend dem eingangs geschilderten Verfahren mittels Chip- oder Magnetkarte ermöglichen. Ein Ersatz dieser Kasseneinrichtungen durch neuartige Kasseneinrichtungen, welche die bargeldlose Zahlung unter Nutzung einer Funkschnittstelle ermöglichen, kommt dabei aus Kostengründen nicht in Betracht. Auf der anderen Seite bestehen aber gegenüber einem Eingriff in die vorhandenen Systeme, um sie für diese neue Art der Bezahlung umzurüsten, sowohl bei den Betreibern der entsprechenden Kasseneinrichtungen als auch unter sicherheitstechnischen Gesichtspunkten bei den Zahlungsdienstleistern erhebliche Bedenken.

Aufgabe der Erfindung ist es daher, eine kostengünstige Lösung anzugeben, welche vorzugsweise unter Verwendung der bestehenden Infrastruktur neue Möglichkeiten für den bargeldlosen Zahlungsverkehr am Point-of-Sale über eine Funkschnittstelle eröffnet. Hierzu sind eine entsprechende Kasseneinrichtung bereitzustellen und ein diese Kasseneinrichtung nutzendes Verfahren zu beschreiben.

Die Aufgabe wird durch eine Kasseneinrichtung mit den Merkmalen des Patentanspruchs 1 gelöst. Vorteilhafte Aus- beziehungsweise Weiterbildungen der erfindungsgemäßen Kasseneinrichtung sind durch die Unteransprüche gegeben. Ein die Aufgabe lösendes Verfahren ist durch den verfahrensbezogenen Patentanspruch charakterisiert.

Die zur Lösung der Aufgabe vorgeschlagene Kasseneinrichtung ist gemäß der Aufgabe als Teil eines elektronischen Systems für den bargeldlosen Zahlungsverkehr ausgebildet. Das entsprechende elektronische System besteht hierbei aus der computerbasierten Kasseneinrichtung selbst, aus einer Mehrzahl, mit einer normierten Funkschnittstelle ausgestatteter Token zur jeweiligen Authentifizierung eines ein solches Token für einen bargeldlosen Bezahlvorgang an der Kasseneinrichtung verwendenden Käufers gegenüber einem Zahlungsdienstleister, aus elektronischen Backendeinrichtungen von Zahlungsdienstleistern und aus einem Netzwerk zum Datenaustausch zwischen der Kasseneinrichtung und den Backendeinrichtungen der Zahlungsdienstleister. Die vorgenannten Backendeinrichtungen der Zahlungsdienstleister, welche bargeldlose Zahlungen vermitteln, wickeln einen jeweiligen Bezahlvorgang, welcher unter Verwendung eines der Token und der erfindungsgemäßen Kasseneinrichtung erfolgt, transaktionsbasiert ab. Die computerbasierte Kasseneinrichtung weist eine Zentralverarbeitungseinheit, eine von der Zentralverarbeitungseinheit verarbeitete Kern-Kassenanwendung und darüber hinaus eine zu der Funkschnittstelle der Token kompatible Funkschnittstelle auf. Erfindungsgemäß ist die Kasseneinrichtung für bargeldlose Zahlungen unter Verwendung unterschiedlicher Bezahlsysteme und/oder der Bezahlsysteme unterschiedlicher Zahlungsdienstleister mittels der Token ausgebildet. Sie ist hierzu um ein die Funkschnittstelle umfassendes Schreib-/Lesemodul und um ein zusätzliches universelles, gegenüber der Kern-Kassenanwendung separates Kommunikationsmodul erweitert. Dieses Kommunikationsmodul interagiert mit der Kern-Kassenanwendung über ein Application Programm Interface (API), also eine Standardprogrammschnittstelle, und somit ohne Eingriff in die eigentliche Kern-Kassenanwendung. Über das API steuert das genannte universelle Kommunikationsmodul während eines Bezahlvorgangs die über die Funkschnittstellen erfolgende Kommunikation der Kern-Kassenanwendung mit dem jeweiligen, ein beliebiges der von der Kasseneinrichtung unterstützten Bezahlsysteme nutzenden Token sowie außerdem die über das Netzwerk erfolgende Kommunikation zwischen der Kern-Kassenanwendung und den Backendeinrichtungen des in den jeweiligen Bezahlvorgang einbezogenen Zahlungsdienstleisters. Die Universalität des Kommunikationsmoduls bezieht sich dabei auf dessen Eignung für die Steuerung der für bargeldlose Bezahlvorgänge erforderlichen Kommunikation unabhängig davon, welches von der Kasseneinrichtung aus rein logischer Sicht beziehungsweise wirtschaftlichen Gründen akzeptierte Bezahlsystem gewählt wird und welche Backendeinrichtungen welches Zahlungsdienstleisters demnach in den Bezahlvorgang einbezogen sind.

Durch die Abwicklung des während eines Bezahlvorgangs zwischen einem jeweiligen Token und der Kern-Kassenanwendung erforderlichen Datenaustausches über ein API der Kasseneinrichtung gestattet es die erfindungsgemäße Lösung, die Möglichkeit einer bargeldlosen Bezahlung, mittels über Funk mit der Kasseneinrichtung zu koppelnder Token, ohne einen Eingriff in die Kern-Kassenanwendung bereitzustellen. Von besonderem Vorteil ist es dabei, dass durch die erfindungsgemäße Ausbildung der Kasseneinrichtung ohne einen solchen Eingriff in deren Kern-Kassenanwendung eine zusätzliche funkgestützte Schnittstelle zur Verfügung gestellt wird, jedoch davon unabhängig die bereits bekannten und gegebenenfalls an der Kasseneinrichtung ausgebildeten Schnittstellen, wie zum Beispiel ein Magnetkartenleser oder ein Barcodescanner, weitergenutzt werden können.

An dieser Stelle sei darauf hingewiesen, dass im Kontext der Darstellung der Erfindung in der Beschreibung und in den Ansprüchen zwischen einem elektronischen System (begrifflich als "System" in Alleinstellung gebraucht), als einem physischen, aus entsprechenden hard- und softwarebasierten Einheiten bestehenden System und Bezahlsystemen, als zwar ebenfalls mittels solcher Einheiten realisierten, aber eher unter logischen Gesichtspunkten, nach den dahinter stehenden wirtschaftlichen Konzepten für die Zahlungsabwicklung zu differenzierenden Systemen unterschieden wird. So wird im Hinblick auf die Bezahlsysteme zum Beispiel zwischen Prepaid-Systemen, Postpaid-Systemen und Kreditkartensystemen unterschieden, wobei sich zum Beispiel letztere wiederum für verschiedene Anbieter (Kreditkartenausgeber) beziehungsweise Zahlungsdienstleister möglicherweise in ihrer wirtschaftlichen Ausgestaltung, aber jedenfalls bezüglich der zu ihrer Nutzung jeweils zu erforderlichen Art der Authentifizierung unterscheiden.

Entsprechend einer bevorzugten Ausbildungsform der erfindungsgemäßen Kasseneinrichtung ist deren Funkschnittstelle als eine NFC-Schnittstelle für die Nahbereichskommunikation ausgebildet. Selbstverständlich müssen in diesem Falle die einen Teil des entsprechenden elektronischen Systems ausbildenden Token ebenfalls mit einer solchen NFC-Schnittstelle ausgestattet sein.

Gemäß einer möglichen Ausbildungsform der Kasseneinrichtung sind das die Funkschnittstelle umfassende Schreib-/Lesemodul und/oder das Kommunikationsmodul in einem separaten Gehäuse angeordnet. Die genannten Einheiten sind dabei mit den übrigen Komponenten der Kasseneinrichtung über eine Standard-Hardware-Schnittstelle, wie beispielsweise einen USB-Anschluss, in die zur Abwicklung von Bezahlvorgängen erforderliche Wirkverbindung gebracht.

Nach dem zur Lösung der Aufgabe vorgeschlagenen Verfahren zur Durchführung bargeldloser Bezahlvorgänge unter Verwendung der zuvor beschriebenen Kasseneinrichtung mit NFC-Schnittstelle werden für die bargeldlose Bezahlung Mobiltelefone verwendet, welche ebenfalls mit einer solchen NFC-Schnittstelle ausgestattet sind. Dabei dient die als SIM-Karte ausgebildete UICC der betreffenden Mobiltelefone als Token zur Authentifizierung der sie für einen jeweiligen Bezahlvorgang verwendenden Käufer gegenüber einem Zahlungsdienstleister. Für den Bezahlvorgang selbst sind im Hinblick auf die Ausbildung der Kasseneinrichtung, welche erfindungsgemäß um ein universelles Kommunikationsmodul erweitert ist, unterschiedliche Bezahlsysteme und/oder Bezahlsysteme unterschiedlicher Zahlungsdienstleister nutzbar. Dabei wird die Kommunikation des für einen Bezahlvorgang jeweils verwendeten Token mit der Kern-Kassenanwendung durch das universelle Kommunikationsmodul der Kasseneinrichtung gesteuert, welches erfindungsgemäß über ein API in eine Wirkverbindung mit der Kern-Kassenanwendung der Kasseneinrichtung gebracht ist. Ein wesentliches Element des Verfahrens ist es demnach, den zur Erweiterung der Möglichkeiten der Kasseneinrichtung durch ein alternatives bargeldloses Bezahlverfahren erforderlichen Datenverkehr über ein API der betreffenden Kasseneinrichtung abzuwickeln und dieses ohne Eingriff in die Kern-Kassenanwendung durch das zusätzliche Kommunikationsmodul zu steuern.

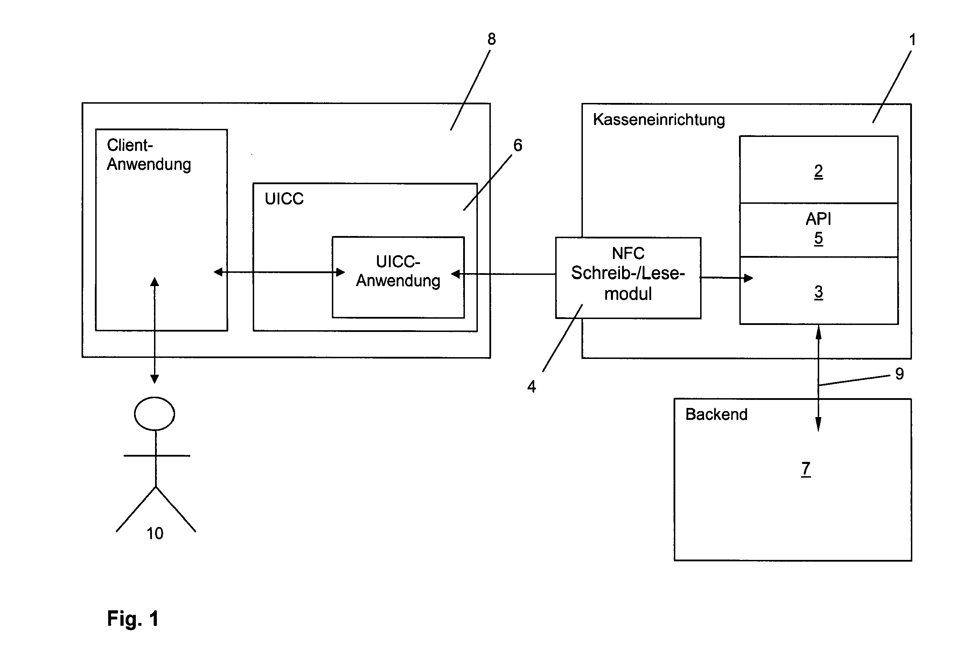

Die Erfindung soll nachfolgend nochmals anhand eines Ausführungsbeispiels erläutert werden. Dazu zeigt die Fig. 1 nach Art eines Blockschaltbilds ein Schema eines Systems für den bargeldlosen Zahlungsverkehr unter Einbeziehung einer möglichen Ausbildungsform der erfindungsgemäßen Kasseneinrichtung.

Wesentliche Elemente dieses Systems sind ein Token 6, mittels welchem ein dieses Token 6 für einen Bezahlvorgang benutzender Käufer 10 sich gegenüber einem Zahlungsdienstleister authentifiziert, die erfindungsgemäß ausgebildete Kasseneinrichtung 1 und elektronische Backendeinrichtungen 7 des beziehungsweise der Zahlungsdienstleister, wobei die Kasseneinrichtung 1 mit diesen Backendeinrichtungen 7 über ein Netzwerk 9 verbunden ist. In dem dargestellten Beispiel ist das Token 6 Bestandteil eines von einem Käufer 10 für die Bezahlung verwendeten Mobiltelefons 8. Bei dem Token 6 handelt es sich demgemäß um eine speziell ausgebildete UICC in Form der auch für die Benutzung der Telefonie verwendeten SIM-Karte im Mobiltelefon 8 des Käufers 10. Die Kasseneinrichtung 1 ist erfindungsgemäß modular erweitert, und zwar um ein Schreib-/Lesemodul 4, welches die NFC-Schnittstelle zur Kommunikation mit dem mit einer ebensolchen Schnittstelle ausgestatteten Mobiltelefon 8 umfasst, und mit dem universellen Kommunikationsmodul 3, welches ohne Eingriff in die Kern-Kassenanwendung 2 beim Ablauf eines Bezahlvorgangs die Kommunikation zwischen dem Token 6 und der Kern-Kassenanwendung 2 einerseits sowie die Kommunikation zwischen der Kern-Kassenanwendung 2 und den Backendeinrichtungen 7 der Zahlungsdienstleister steuert. Zu diesem Zweck ist das genannte universelle Kommunikationsmodul über ein API 5, das heißt eine Standardprogrammschnittstelle, in die computerbasierte Kasseneinrichtung 1 eingebunden beziehungsweise mit deren Kern-Kassenanwendung 2 in eine Wirkverbindung gebracht.

Bei einem unter Nutzung des in der Fig. 1 gezeigten Systems erfolgenden bargeldlosen Bezahlungsvorgang vollzieht sich folgender Ablauf:
- Der Käufer 10 wählt nach Abschluss der Registrierung der zu bezahlenden Artikel an der Kasseeinrichtung 1 das gewünschte Bezahlverfahren auf Basis der (nicht im Detail gezeigten) Funkschnittstelle und des Mobiltelefons 8.
- Die Kern Kern-Kassenanwendung 2 der Kasseneinrichtung 1 des übermittelt über ein dazu genutztes API 5 die Transaktionsdaten an das erfindungsgemäße Kommunikationsmodul 3.
- Der Käufer 10 bringt sein NFC-fähiges Mobiltelefon 8 in Reichweite des mit einer ebensolchen NFC-Schnittstelle ausgestatteten Schreib-/Lesemoduls 4 an der Kasseneinrichtung 1.
- Das Kommunikationsmodul 3 überträgt die Transaktionsdaten an das Mobiltelefon 8.
- Die Bezahl-Transaktionsdaten werden im Mobiltelefon 8 über vorzugsweise eine Single-Wire-Protocol-Schnittstelle an die als Token 6 für den Bezahlvorgang fungierende UICC übertragen.
- Zeitgleich startet auf dem Mobiltelefon 8 eine Client-Anwendung 11, die auf dem Betriebssystem des Mobiltelefons 8 läuft.
- Der Käufer 10 entfernt das Mobiltelefon 8 vom Schreib-/Lesemodul 4. Auf dem Mobiltelefon 8 werden von der Client-Anwendung 11 die Transaktionsdaten angezeigt, die diese aus der UICC mit Hilfe einer dort gehaltenen, den Einsatz des Mobiltelefons für den Bezahlvorgang beziehungsweise die Nutzung seiner SIM-Karte als Token 6 ermöglichenden Bezahlanwendung 12 ausgelesen hat.
- Der Käufer 10 bestätigt die Zahlung oder lehnt sie ab.
- Die Client-Anwendung 11 hinterlegt die Entscheidung des Käufers 10 auf der UICC, indem sie diese der entsprechenden UICC-Bezahlanwendung 12 mitteilt.
- Danach bringt der Nutzer beziehungsweise Käufer 10 das Mobiltelefon 8 wieder in Kontakt mit dem Schreib-/Lesemodul 4 der Kasseneinrichtung 1 beziehungsweise mit der NFC-Schnittstelle des Schreib-/Lesemoduls 4.
- Das Kommunikationsmodul 3 der Kasseneinrichtung 1 liest die Entscheidung des Käufers 10 aus der UICC aus.
- Die Entscheidung wird über das API 5 an die Kern-Kassenanwendung 2 übergeben.
- Wenn die Entscheidung ablehnend war, wird entweder die Transaktion durch das Kommunikationsmodul 3 komplett abgebrochen, oder der Käufer 10 durch das Kassenpersonal aufgefordert, ein anderes Bezahlverfahren zu wählen.
- Wenn die Entscheidung positiv war, kontaktiert das Kommunikationsmodul 3 die Backendeinrichtungen 7 des im Hinblick auf das zur Anwendung kommende Bezahlsystem in den Bezahlvorgang einzubeziehenden Zahlungsdienstleisters, um den eigentlichen transaktionsbasierten Bezahlvorgang abzuwickeln.
- Das Resultat der entsprechenden Bezahltransaktion sowie gegebenenfalls relevante Daten wie der aktuelle Kontostand (abhängig vom Bezahlsystem) werden abschließend vom Kommunikationsmodul 3 der Kasseneinrichtung 1 auf das Mobiltelefon 8 übertragen und auf der als Token 6 dienenden UICC des Mobiltelefons 8 gespeichert.
- Als letzter Schritt liest die Client-Anwendung 11 des Mobiltelefons 8 diese Information aus der UICC aus und zeigt sie dem Nutzer beziehungsweise Käufer 10 über das Display des Mobiltelefons an.

### Liste der Bezugszeichen

- 1: Kasseneinrichtung
- 2: Kern-Kassenanwendung
- 3: universelles Kommunikationsmodul
- 4: Schreib-Lesemodul
- 5: API (Application Programm Interface)
- 6: Token
- 7: Backendeinrichtungen
- 8: Mobiltelefon
- 9: Netzwerk

## Patentansprüche

1. Kasseneinrichtung (1) als Teil eines elektronischen Systems für den bargeldlosen Zahlungsverkehr, welches besteht aus der computerbasierten Kasseneinrichtung (1) selbst, aus einer Mehrzahl, mit einer normierten Funkschnittstelle ausgestatteter Token (6) zur jeweiligen Authentifizierung eines, ein solches Token (6) für einen bargeldlosen Bezahlvorgang an der Kasseneinrichtung (1) verwendenden Käufers (10) gegenüber einem bargeldlose Zahlungen vermittelnden Zahlungsdienstleister, aus elektronischen Backendeinrichtungen (7) von Zahlungsdienstleistern zur Abwicklung transaktionsbasierter, jeweils unter Verwendung eines der Token (6) und der Kasseneinrichtung (1) erfolgender bargeldloser Bezahlvorgänge und aus einem Netzwerk (9) zum Datenaustausch zwischen der Kasseneinrichtung (1) und den Backendeinrichtungen (7) der Zahlungsdienstleister, wobei die Kasseneinrichtung (1) eine Zentralverarbeitungseinheit, eine von dieser verarbeitete Kern-Kassenanwendung (2) und eine zu der Funkschnittstelle der Token (6) kompatible Funkschnittstelle aufweist, **dadurch gekennzeichnet, dass** die Kasseneinrichtung (1) für mittels der Token (6) erfolgende bargeldlose Zahlungen unter Verwendung unterschiedlicher Bezahlsysteme und/oder der Bezahlsysteme unterschiedlicher Zahlungsdienstleister ausgebildet ist und dazu ohne Eingriff in die Kern-Kassenanwendung (2) um ein die Funkschnittstelle umfassendes Schreib-/Lesemodul (4) und um ein universelles Kommunikationsmodul (3) erweitert ist, welches über ein API (5), nämlich eine Standardprogrammschnittstelle, mit der Kern-Kassenanwendung (2) in eine Wirkverbindung gebracht ist und über dieses API (5) während eines Bezahlvorgangs die über die Funkschnittstellen erfolgende Kommunikation der Kern-Kassenanwendung (2) mit dem jeweiligen Token (6) sowie die über das Netzwerk (9) erfolgende Kommunikation zwischen der Kern-Kassenanwendung (2) und den Backendeinrichtungen (7) des in den jeweiligen Bezahlvorgang einbezogenen Zahlungsdienstleisters steuert.

2. Kasseneinrichtung (1) nach Anspruch 1, **dadurch gekennzeichnet, dass** deren Funkschnittstelle als eine NFC-Schnittstelle für die Nahbereichskommunikation ausgebildet ist.

3. Kasseneinrichtung (1) nach Anspruch 1 oder 2, **dadurch gekennzeichnet, dass** das die Funkschnittstelle umfassende Schreib-/Lesemodul (4) und/oder das Kommunikationsmodul (3) in einem separaten Gehäuse angeordnet und über eine Standardhardwareschnittstelle, welche an einem diese Komponenten aufnehmenden Gehäuse angeordnet ist, mit den übrigen Komponenten der Kasseneinrichtung (1) in eine Wirkverbindung gebracht sind.

4. Kasseneinrichtung (1) nach Anspruch 3, **dadurch gekennzeichnet, dass** diese mit weiteren Schnittstellen für die bargeldlose Bezahlung, nämlich einem Leser für Chip- und/oder Magnetkarten und/oder einem Barcodeleser ausgestattet ist.

5. Verfahren zur Durchführung bargeldloser Bezahlvorgänge unter Verwendung einer Kasseneinrichtung (1) mit einem universellen Kommunikationsmodul (3) nach Anspruch 2, wobei für die bargeldlose Bezahlung mit einer NFC-Schnittstelle ausgestattete Mobiltelefone (8) verwendet werden, deren als SIM-Karte ausgebildete UICC als Token (6) zur Authentifizierung der sie für einen jeweiligen Bezahlvorgang verwendenden Käufer (10) gegenüber einem Zahlungsdienstleister fungieren und wobei bei einem Bezahlvorgang, für welchen unterschiedliche Bezahlsysteme und/oder Bezahlsysteme unterschiedlicher Zahlungsdienstleister verwendbar sind, die über die NFC-Schnittstellen des jeweiligen Token (6) und der Kasseneinrichtung (1) erfolgende Kommunikation des Token (6) mit der Kern-Kassenanwendung (2) durch das über ein API (5) in eine Wirkverbindung mit der Kern-Kassenanwendung (2) gebrachte universelle Kommunikationsmodul (3) der Kasseneinrichtung (1) gesteuert wird.
